# FASCICULE DE BREVET EUROPEEN

(11) **EP 0 743 475 B1**
(45) Date de publication et mention de la délivrance du brevet: **28.07.1999**
(21) Numéro de dépôt: 96401001.1
(22) Date de dépôt: 10.05.1996
(51) Int. Cl.: F16H 59/04, F16H 61/36

(54) **Dispositif de commande d'une boîte de vitesse muni d'un bâti déporté**
Schaltvorrichtung für Getriebe mit räumlich versetzter Abstützung
Gear shift for a gearbox with offset support

(30) Priorité: 17.05.1995 FR 9505831
(43) Date de publication de la demande: 20.11.1996
(73) Titulaire: Société Anonyme dite: REGIE NATIONALE DES USINES RENAULT, 92109 Boulogne Billancourt (FR)
(72) Inventeur: Ducher, Joel, 78100 Saint-Germain-en-Laye (FR)

(56) Documents cités:
- EP-A- 0 358 894
- EP-A- 0 441 248
- EP-A- 0 565 400

## Description

L'invention concerne un dispositif de commande d'une boîte de vitesses de véhicule automobile.

L'invention concerne plus particulièrement un dispositif de commande d'une boîte de vitesses de véhicule automobile, du type comportant un levier de changement de vitesses pivotant autour d'un premier axe sur un support pivotant par rapport au véhicule autour d'un second axe, orthogonal au premier axe, et relié à deux organes de transmission des mouvements du levier en direction de la boîte de vitesses.

Un tel dispositif a déjà été décrit et représenté dans le document FR-A-2.689.460, correspondant au document EP-A-0 565 400, et est notamment utilisé pour commander une boîte de vitesses à l'aide de deux câbles gainés.

Le dispositif a donc pour but de transmettre les mouvements de l'extrémité supérieure du levier de changement de vitesse qui est agencé à l'intérieur de l'habitacle jusqu'à la boîte de vitesses de manière à permettre la sélection et l'engagement des différents rapports de vitesses.

Dans le dispositif décrit dans le document ci-dessus, les deux axes d'articulation du levier sur le support et de pivotement du support sur le bâti sont concourants et le levier est agencé sensiblement perpendiculairement à ces deux axes.

Cette disposition se révèle satisfaisante dans le cas où le levier de vitesse est implanté sur le plancher du véhicule, légèrement en avant du conducteur.

Toutefois, notamment pour des véhicules de type "monospace", on est amené à implanter le levier de vitesses sur le tableau de bord du véhicule de manière à dégager entièrement le plancher du véhicule.

L'ensemble du dispositif de commande de la boîte de vitesses, qui est une structure mécano-soudée relativement lourde, se retrouve alors sensiblement au niveau des genoux du conducteur et du passager ce qui, en cas d'accident, peut être nuisible à leur sécurité.

En effet, il n'est pas possible de protéger un tel type de commande de manière efficace sans augmenter de manière importante le volume de la planche de bord.

Une solution proposée pour remédier à ce problème est d'incliner l'ensemble du dispositif vers l'arrière de manière à en éloigner le bâti vers l'avant.

Toutefois, un tel agencement implique que le plan dans lequel se déplace l'extrémité supérieure du levier de changement de vitesse, qui est parallèle au plan des deux axes d'articulation et de pivotement, se trouve incliné lui aussi.

Ainsi, pour engager un rapport, le conducteur est amené à exercer un effort vertical vers le haut ou vers le bas, plutôt qu'un effort horizontal vers l'avant ou vers l'arrière.

Or il se trouve que, le levier étant agencé au niveau du tableau de bord, le conducteur a alors son bras sensiblement horizontal. Il lui est donc beaucoup plus pénible d'exercer un effort vertical qui est perpendiculaire à l'orientation de son bras plutôt que d'exercer un effort qui serait parallèle à l'orientation de son bras.

De plus, l'inclinaison du levier vers l'arrière implique un plus grand angle de cassure du poignet du conducteur, ce qui se révèle rapidement pénible.

L'invention a donc pour but de proposer un dispositif de commande d'une boîte de vitesses qui permet de reporter vers l'avant le bâti du dispositif tout en conservant à l'extrémité supérieure du levier de changement de vitesse une trajectoire sensiblement horizontale et ergonomiquement favorable.

Dans ce but l'invention propose un dispositif du type présenté dans la revendication 1.

Selon d'autres caractéristiques de l'invention :
- par rapport au véhicule, le premier axe est sensiblement horizontal et longitudinal, en ce que le deuxième axe est sensiblement horizontal et transversal, en ce que chacune des deux biellettes est articulée à l'avant sur le support et à l'arrière sur le levier de manière que le support, les deux biellettes et le levier forment un quadrilatère déformable dans un plan vertical et perpendiculaire à l'axe d'articulation du levier ;
- les biellettes s'étendent longitudinalement vers l'arrière depuis le support pivotant, et en ce que le levier est incliné vers l'arrière par rapport à ses articulations sur les biellettes de manière à reporter vers l'arrière l'extrémité supérieure du levier par rapport à un bâti sur lequel est articulé le support pivotant ;
- les deux biellettes sont agencées selon deux directions longitudinales qui se coupent sensiblement à la verticale de l'extrémité supérieure du levier de manière que les mouvements de l'extrémité supérieure du levier par rapport au bâti du dispositif soient sensiblement situés dans un plan horizontal ;
- l'une des biellettes, supérieure, est articulée sur le support au dessus de l'axe de pivotement du support et l'autre biellette, inférieure, est articulée en dessous de l'axe ;
- le premier organe de transmission est relié à la biellette inférieure ;
- la biellette inférieure comporte un prolongement longitudinal vers l'avant à l'extrémité libre duquel est relié le premier organe de transmission ;
- l'axe de pivotement du support est sensiblement contenu dans le plan vertical des deux biellettes de manière à rendre négligeable l'influence du pivotement du support autour de l'axe sur le déplacement du premier organe de transmission relié à la biellette ;
- le dispositif est du type dans lequel le bâti comporte une embase formée d'une plaque sensiblement horizontale de fixation sur la caisse du véhicule et comporte deux montants parallèles, agencés perpendiculairement depuis l'embase, entre les extrémités libre desquels le support est monté pivotant, du type dans lequel le support comporte un bras transversal à l'extrémité libre duquel est relié le second organe de transmission ;
- les organes de transmission des mouvements du levier sont des câbles gainés et les gaines de câbles prennent appui contre une face inférieure de l'embase du bâti du dispositif ;
- le dispositif est réalisé en construction mécano-soudée ;
- les mouvements transversaux du levier correspondent à la sélection d'une ligne de rapports de vitesses et les mouvements longitudinaux du levier correspondent à un engagement d'un rapport de vitesses.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective partiellement éclatée d'un dispositif de commande de boîte de vitesses selon l'invention ;
- les figures 2 et 3 sont des vues détaillées d'un tel dispositif, vu respectivement de côté et de face ;
- Les figures 4A, 4B et 4C représentent de manière schématique une commande de boîte de vitesses conforme aux enseignements de l'invention vu de côté et représentée respectivement en position de point mort et suivant deux positions d'engagement ;
- les figures 5A, 5B et 5C sont des vues schématiques de face d'un tel dispositif représenté respectivement au point mort et suivant deux positions de sélection.

Dans le texte ci-dessous, on utilisera, pour situer les pièces dans l'espace, les termes horizontal, vertical, supérieur, inférieur, longitudinal et transversal en référence aux figures dans lesquelles le dispositif selon l'invention est représenté dans une position classique d'implantation à l'intérieur du véhicule.

Toutefois, on pourra prévoir d'orienter le dispositif d'une manière différente sans sortir du cadre de l'invention.

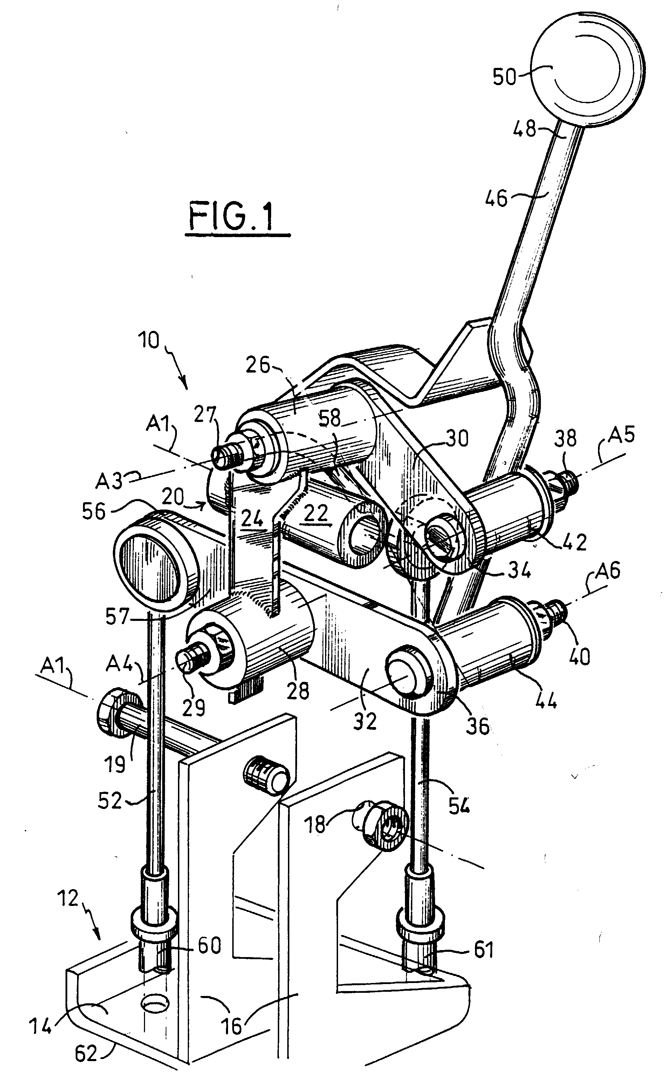

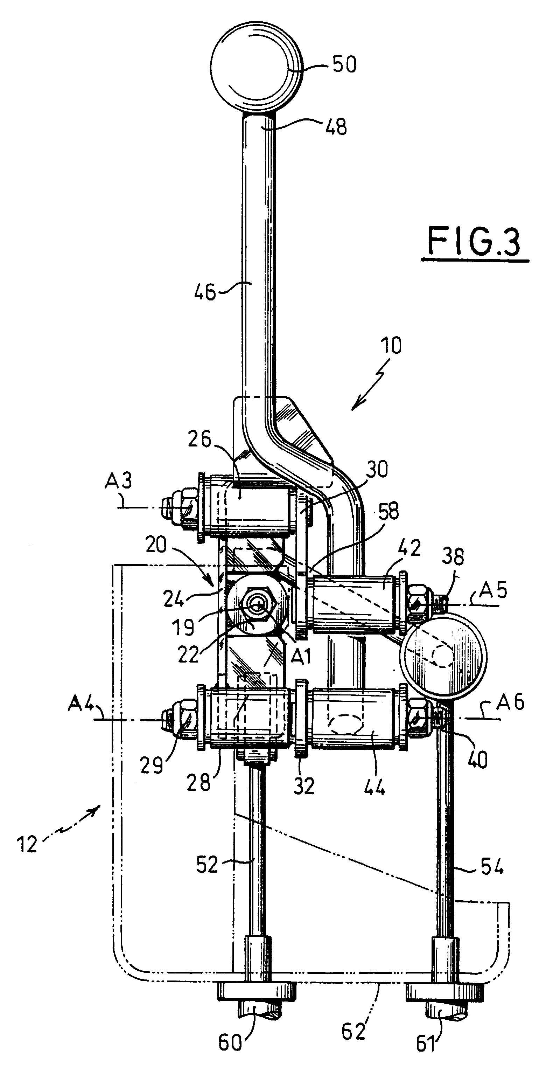

Les figures 1, 2 et 3 représentent un mode de réalisation préféré d'un dispositif de commande par câbles d'une boîte de vitesses conforme aux enseignements de l'invention.

Le dispositif 10 est fixé sur la caisse du véhicule (non représentée) par un bâti 12 qui comporte principalement une embase horizontale 14 de fixation et des montants parallèles verticaux 16.

Les deux montants 16 sont percés chacun d'un trou 18 d'axe longitudinal Al sensiblement horizontal.

Les trous 18 sont destinés à recevoir un boulon 19 faisant office d'arbre de pivot pour un support pivotant 20.

Le support pivotant 20 comporte un corps de pivot 22 tubulaire traversé par l'arbre de pivot 19, reçu entre les deux montants 16 et sur lequel est soudée une plaque verticale longitudinale 24 qui supporte deux fourreaux d'articulation 26, 28 d'axes transversaux respectifs A3, A4.

Les fourreaux transversaux 26, 28 sont donc susceptibles de pivoter avec le support 20 autour de l'axe A1 longitudinal.

Deux biellettes, respectivement supérieure 30 et inférieure 32 sont articulées sur le support 20 autour des axes respectifs A3 et A4 grâce à des tiges 27, 29 reçues dans les fourreaux d'articulation 26, 28.

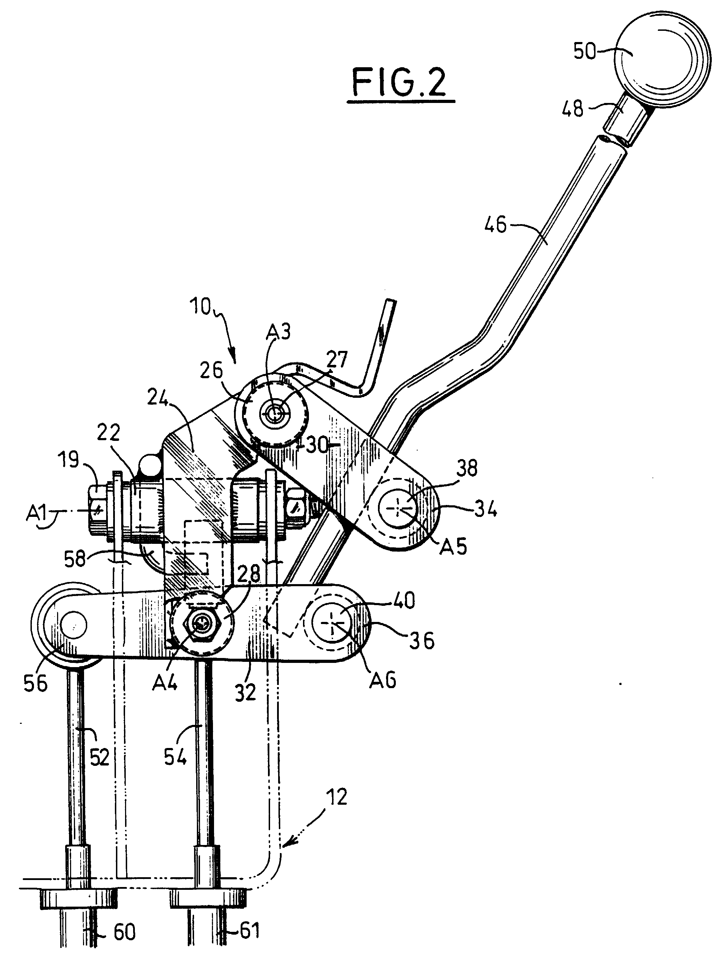

Les biellettes 30, 32 s'étendent longitudinalement vers l'arrière en considérant les figures 1 et 2, et portent à leurs extrémités arrières respectives 34, 36 des arbres d'articulation 38, 40 d'axes transversaux respectifs A5, A6.

Deux manchons 42, 44 sont montés à rotation sur les arbres d'articulation 38, 40 autour des axes transversaux respectifs A5, A6 parallèles aux axes A3 et A4.

Un levier de changement de vitesse 46 est fixé par soudage sur chacun des deux manchons 42, 44 et il s'étend dans un plan vertical longitudinal qui contient sensiblement l'axe A1.

Conformément aux enseignements de l'invention et comme on peut le voir plus particulièrement sur la figure 2, le levier 46 est incliné vers l'arrière et porte à son extrémité supérieure 48 un pommeau de manoeuvre 50.

Ainsi agencés, la plaque verticale 24 du support 20, les deux biellettes 30, 32 et le levier 46 forment un quadrilatère articulé à ses quatres sommets autour des axes A3, A4, A5 et A6.

De plus, l'ensemble étant lié au support pivotant 20, il peut pivoter autour de l'axe A1.

Afin de transmettre les mouvements du levier 46 vers la boîte de vitesses, on a prévu deux câbles 52, 54 dont le premier est articulé à l'extrémité libre 56 d'un prolongement 57 de la biellette inférieure 32 qui s'étend longitudinalement en avant de son axe A4 d'articulation sur le support 20.

Le premier câble 52 permet de transmettre en direction de la boîte de vitesses les mouvements du levier 46 dans un plan longitudinal.

Le second câble 54 est accroché à l'extrémité d'un bras transversal 58 qui est fixé sur le support pivotant 20.

Ainsi, le bras transversal 58 permet de transmettre en direction de la boîte de vitesses les mouvements du levier 46 dans un plan transversal.

Le dispositif de commande 10 représenté sur les figures étant un dispositif destiné à être implanté sur le tableau de bord d'un véhicule, c'est-à-dire sensiblement à la verticale du compartiment moteur, la sortie des câbles gainés 52, 54 est prévue verticalement.

Aussi, les gaines 60, 61 des câbles 52, 54 sont prévues pour être en appui contre une face inférieure 62 de la base 14 du bâti 12 du dispositif 10.

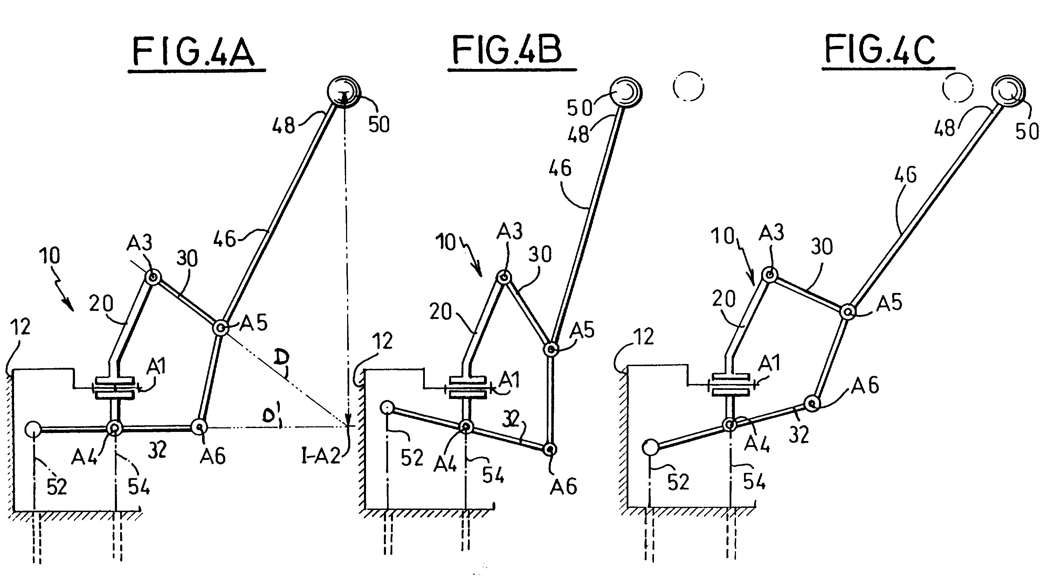

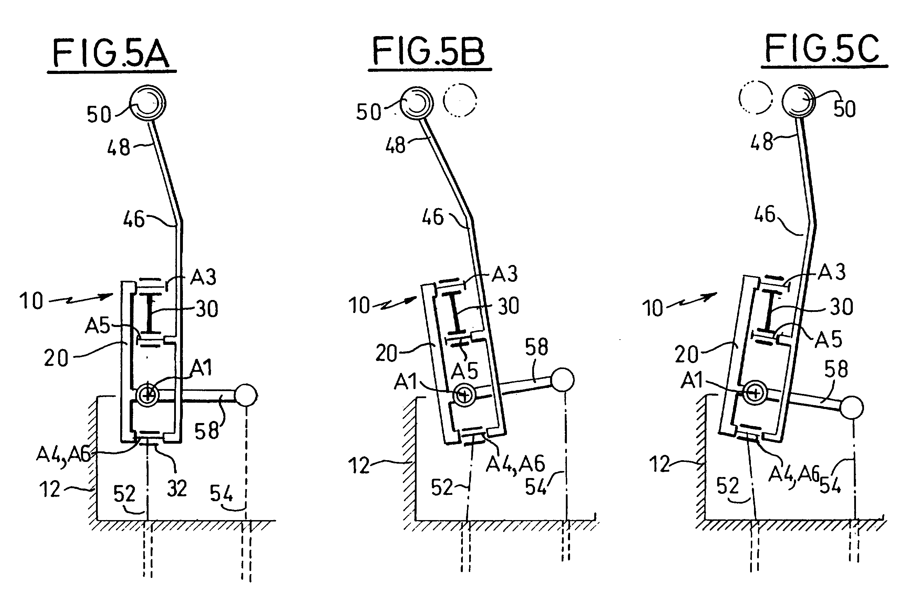

On a représenté sur les figures 4A, 4B, 4C et 5A, 5B, 5C de manière schématique le fonctionnement d'un dispositif selon l'invention.

Sur la figure 4A, le dispositif est représenté au point mort, vu de côté, et l'on y voit le levier 46 qui est articulé grâce aux deux biellettes 30, 32 sur le support pivotant 20.

Le point I, intersection de la droite D, perpendiculaire commune dans le plan vertical longitudinal aux axes A3, A5 d'articulation de la biellette 30 avec la droite D', perpendiculaire commune dans le plan vertical longitudinal aux axes A4, A6 de la biellette 32, représente le centre de rotation instantanée du mouvement du levier 46 par rapport au bâti 10 dans le plan vertical longitudinal. Selon une caractéristique de l'invention, le centre instantané de rotation I se situe sensiblement à la verticale du pommeau 50 agencé à l'extrémité supérieure 48 du levier 46 de manière que la trajectoire du pommeau 50 du levier 46 soit sensiblement horizontale.

En effet, comme on peut le voir sur les figures 4B et 4C, le centre instantané de rotation reste sensiblement à la verticale du pommeau 50 lorsque celui-ci se déplace.

Ainsi, le dispositif 10 transforme le mouvement essentiellement longitudinal du pommeau 50 en un déplacement essentiellement vertical de l'extrémité 56 de la biellette inférieure 32 à laquelle est accroché le câble 52.

Sur les figures 5A, 5B, 5C on a représenté dans un plan transversal les différentes positions de sélection du levier 46.

Sur la figure 4A, sur laquelle le dispositif est représenté au point mort, on remarque notamment le bras transversal 58 à l'extrémité libre duquel est accroché le câble 54.

Le bras transversal 58 est fixé sur le support pivotant 20 de sorte que, lorsque le pommeau 50 est manoeuvré dans une direction transversale, le levier 46 provoque un pivotement du support 20 autour de son axe A1 qui entraîne avec lui le bras transversal 58 dont l'extrémité libre décrit une trajectoire verticale qui est transmise à la boîte de vitesses par le câble 54.

Des agencements particuliers du mode de réalisation permettent de découpler dans une large mesure la transmission des mouvements longitudinaux et transversaux du pommeau 50.

Dans un premier temps, lorsque le conducteur commence par sélectionner une ligne de rapports en déplaçant le pommeau transversalement, le support 20 pivote autour de son axe A1.

Or, la biellette inférieure 32 étant agencée dans le plan vertical longitudinal qui contient l'axe A1 et étant située à très faible distance de l'axe A1, son déplacement est de très faible amplitude et s'effectue de surcroît perpendiculairement à la direction du câble 52 de sorte qu'aucun mouvement n'est transmis par le câble 52 à la boîte de vitesses.

Lorsque le conducteur engage un rapport en manoeuvrant le pommeau 50 selon une direction longitudinale, le support 20 reste dans sa position précédente et il n'y a donc pas de déplacement ni du bras transversal 58, ni du câble 54 qui y est accroché.

## Revendications

1. Dispositif de commande (10) d'une boîte de vitesses de véhicule automobile, du type comportant un levier de changement de vitesses (46) pivotant autour d'un premier axe (A1) sur un support (20) pivotant par rapport au véhicule autour d'un second axe (A2), orthogonal au premier axe (A1), et relié à deux organes (52, 54) de transmission des mouvements du levier (46) en direction de la boîte de vitesses, caractérisé en ce que le levier (46) et le support (20) sont reliés par deux biellettes, respectivement supérieure et inférieure (30, 32), de façon à former avec celles-ci un quadrilatère déformable (A3, A4, A5, A6), les extrémités des deux organes de transmission (52, 54) étant reliées respectivement à l'une (32) des biellettes et au support pivotant (20).

2. Dispositif selon la revendication 1, caractérisé en ce que, par rapport au véhicule, le premier axe (A1) est sensiblement horizontal et longitudinal, en ce que le deuxième axe (A2) est sensiblement horizontal et transversal, en ce que chacune des deux biellettes (30, 32) est articulée à l'avant sur le support (20) et à l'arrière sur le levier (46) de manière que le support (20), les deux biellettes (30, 32) et le levier (46) forment un quadrilatère déformable (A3, A4, A5, A6) dans un plan vertical et perpendiculaire à l'axe (A2) d'articulation du levier.

3. Dispositif selon la revendication 2, caractérisé en ce que les biellettes (30, 32) s'étendent longitudinalement vers l'arrière depuis le support pivotant (20), et en ce que le levier (46) est incliné vers l'arrière par rapport à ses articulations sur les biellettes (30, 32) de manière à reporter vers l'arrière l'extrémité supérieure (48) du levier (50) par rapport à un bâti (12) sur lequel est articulé le support pivotant (20).

4. Dispositif selon la revendication 3, caractérisé en ce que les deux biellettes (30, 32) sont agencées selon deux directions longitudinales qui se coupent sensiblement à la verticale de l'extrémité supérieure (48) du levier (46) de manière que les mouvements de l'extrémité supérieure (48) du levier (46) par rapport au bâti (12) du dispositif soient sensiblement situés dans un plan horizontal.

5. Dispositif selon la revendication 4, caractérisé en ce que la biellette supérieure (30), est articulée sur le support (20) au dessus de l'axe (A1) de pivotement du support (20) et en ce que la biellette inférieure (32), est articulée en dessous de l'axe (A1).

6. Dispositif selon la revendication 5, caractérisé en ce qu'un premier organe de transmission (52) est relié à la biellette inférieure (32).

7. Dispositif selon la revendication 6, caractérisé en ce que la biellette inférieure (32) comporte un prolongement longitudinal (57) vers l'avant à l'extrémité libre duquel est relié le premier organe de transmission (52).

8. Dispositif selon l'une quelconque des revendications 2 à 7, caractérisé en ce que l'axe (A1) de pivotement du support (20) est sensiblement contenu dans le plan vertical et longitudinal des deux biellettes (30,32) de manière à rendre négligeable l'influence du pivotement du support (20) autour de l'axe (A1) sur le déplacement du premier organe de transmission (52) relié à la biellette (32).

9. Dispositif selon l'une quelconque des revendications 2 à 8, caractérisé en ce qu'il est du type dans lequel le bâti (12) comporte une embase (14) formée d'une plaque sensiblement horizontale de fixation sur la caisse du véhicule et comporte deux montants (16) parallèles, agencés perpendiculairement depuis l'embase (14), entre les extrémités libre desquels le support (20) est monté pivotant, du type dans lequel le support (20) comporte un bras transversal (58) à l'extrémité libre duquel est relié le second organe de transmission (54).

10. Dispositif selon la revendication 9, caractérisé en ce que les organes de transmission (52, 54) des mouvements du levier (46) sont des câbles gainés et en ce que les gaines (60, 61) de câbles prennent appui contre une face inférieure (62) de l'embase (14) du bâti (12) du dispositif.

11. Dispositif selon l'une quelconque des revendication 2 à 10, caractérisé en ce qu'il est réalisé en construction mécano-soudée.

12. Dispositif selon l'une quelconque des revendications 2 à 11, caractérisé en ce que les mouvements transversaux du levier (46) correspondent à la sélection d'une ligne de rapports de vitesses et en ce que les mouvements longitudinaux du levier (46) correspondent à un engagement d'un rapport de vitesses.

## Patentansprüche

1. Schaltvorrichtung (10) für ein Kraftfahrzeuggetriebe, mit einem Schalthebel (46), der schwenkbar um eine erste Achse (A1) an einer Halterung (20) befestigt ist, die schwenkbar relativ zum Fahrzeug um eine zweite Achse (A2) senkrecht zur ersten Achse (A1) angeordnet ist und die mit zwei Teilen (52, 54) zur Übertragung der Bewegungen des Hebels (46) zum Getriebe verbunden ist, dadurch gekennzeichnet, dass der Hebel (46) und die Halterung (20) über zwei obere bzw. untere Schwingarme (30, 32) derart miteinander verbunden sind, dass sie zusammen ein verformbares unregelmäßiges Viereck (A3, A4, A5, A6) bilden, wobei die Enden der beiden Übertragungsteile (52, 54) mit einem der Schwingarme (32) bzw. der Halterung (20) verbunden sind.

2. Vorrichtung nach Anspruch 1, dadurch gekennzeichnet, dass die erste Achse (A1) bezüglich des Fahrzeugs im wesentlichen waagrecht und in Längsrichtung verläuft, dass die zweite Achse (A2) im wesentlichen waagrecht und in Querrichtung verläuft, dass jeder der beiden Schwingarme (30, 32) mit dem Vorderteil an der Halterung (20) angelenkt ist und mit dem Hinterteil am Hebel (46) derart angelenkt ist, dass die Halterung (20), die beiden Schwingarme (30, 32) und der Hebel (46) ein verformbares unregelmäßiges Viereck (A3, A4, A5, A6) in einer Ebene bilden, die senkrecht und im rechten Winkel zur Gelenkachse (A2) des Hebels verläuft.

3. Vorrichtung nach Anspruch 2, dadurch gekennzeichnet, dass die Schwingarme (30, 32) sich in Längsrichtung nach hinten, ausgehend von der schwenkbaren Halterung (20), erstrecken und dass der Hebel (46) bezüglich seiner Anlenkung an den Schwingarmen (30, 32) derart nach hinten geneigt ist, dass das obere Ende (48) des Hebels (46) bezüglich eines Gehäuses (12), an dem die schwenkbare Halterung (20) angelenkt ist, nach hinten versetzt ist.

4. Vorrichtung nach Anspruch 3, dadurch gekennzeichnet, dass die beiden Schwingarme (30, 32) in zwei Längsrichtungen ausgerichtet sind, die sich in der Senkrechten durch das obere Ende (48) des Hebels (46) derart schneiden, dass die Bewegungen des oberen Endes (48) des Hebels (46) bezüglich des Gehäuses (12) der Vorrichtung im wesentlichen in einer waagrechten Ebene verlaufen.

5. Vorrichtung nach Anspruch 4, dadurch gekennzeichnet, dass der obere Schwingarm (30) an der Halterung (20) oberhalb der Schwenkachse (A1) der Halterung (20) angelenkt ist und dass der untere Schwingarm (32) unterhalb der Achse (A1) angelenkt ist.

6. Vorrichtung nach Anspruch 5, dadurch gekennzeichnet, dass das Übertragungsteil (52) mit dem unteren Schwingarm (32) verbunden ist.

7. Vorrichtung nach Anspruch 6, dadurch gekennzeichnet, dass der untere Schwingarm (32) mit einer sich nach vorne in Längsrichtung erstreckenden Verlängerung (57) versehen ist, an deren freiem Ende das erste Übertragungsteil (52) befestigt ist.

8. Vorrichtung nach einem der Ansprüche 2 bis 7, dadurch gekennzeichnet, dass die Schwenkachse (A1) der Halterung (20) im wesentlichen in der senkrechten, sich in Längsrichtung erstreckenden Ebene der beiden Schwingarme (30, 32) derart angeordnet ist, dass der Schwenkeinfluß der Halterung (20) um die Achse (A1) auf die Verschiebung des ersten mit dem Schwingarm (32) verbundenen Übertragungsteil (52) vernachlässigbar ist.

9. Vorrichtung nach einem der Ansprüche 2 bis 8, dadurch gekennzeichnet, dass sie derart ausgestaltet ist, dass das Gehäuse (12) ein Grundteil (14) aufweist, das aus einer im wesentlichen waagrechten Befestigungsplatte an der Karosserie des Fahrzeugs besteht, wobei sie mit parallelen Wänden (16) versehen ist, die sich in senkrechter Richtung von dem Grundteil (14) weg erstrecken, wobei zwischen ihren freien Enden die Halterung (20) schwenkbar angeordnet ist, die eine Querachse (58) aufweist, an deren freiem Ende das zweite Übertragungsteil (54) befestigt ist.

10. Vorrichtung nach Anspruch 9, dadurch gekennzeichnet, dass die Übertragungsteile (52, 54) für die Bewegungen des Hebels (46) in Hüllen geführte Kabel sind und dass sich die Hüllen (60, 61) der Kabel auf einer Unterseite (62) des Grundteils (14) des Gehäuses (12) der Vorrichtung abstützen.

11. Vorrichtung nach einem der Ansprüche 2 bis 10, dadurch gekennzeichnet, dass sie aus einem mechanisch verschweißten Aufbau besteht.

12. Vorrichtung nach einem der Ansprüche 2 bis 11, dadurch gekennzeichnet, dass die Querbewegungen des Hebels (46) der Auswahl einer Schaltgasse für die Gänge entsprechen und dass die Längsbewegungen des Hebels (46) dem Einlegen eines Ganges entsprechen.

## Claims

1. An arrangement (10) for controlling a motor vehicle gearbox, of the type comprising a gear shift lever (46) pivotable about a first axis (A1) on a support (20) pivotable with respect to the vehicle about a second axis (A2) orthogonal to the first axis (A1), and connected to two members (52, 54) for transmission of the movements of the lever (46) in the direction of the gearbox, characterised in that the lever (46) and the support (20) are connected by two links (30, 32), an upper link and a lower link respectively, so as to form with said links a deformable quadrilateral (A3, A4, A5, A6), the ends of the two transmission members (52, 54) being respectively connected to one (32) of the links and to the pivotable support (20).

2. An arrangement according to claim 1 characterised in that, with respect to the vehicle, the first axis (A1) is substantially horizontal and longitudinal, that the second axis (A2) is substantially horizontal and transverse, and that each of the two links (30, 32) is pivotably mounted at the front to the support (20) and at the rear to the lever (46) in such a way that the support (20), the two links (30, 32) and the lever (46) form a quadrilateral (A3, A4, A5, A6) deformable in a vertical plane perpendicular to the pivotal mounting axis (A2) of the lever.

3. An arrangement according to claim 2 characterised in that the links (30, 32) extend longitudinally rearwardly from the pivotable support (20) and that the lever (46) is inclined rearwardly with respect to its pivotal mountings to the links (30, 32) so as to take the upper end (48) of the lever (46) rearwardly with respect to a frame structure (12) on which the pivotable support (20) is pivotably mounted.

4. An arrangement according to claim 3 characterised in that the two links (30, 32) are arranged in two longitudinal directions which intersect substantially in vertical alignment with the upper end (48) of the lever (46) in such a way that the movements of the upper end (48) of the lever (46) with respect to the frame structure (12) of the arrangement are substantially in a horizontal plane.

5. An arrangement according to claim 4 characterised in that the upper link (30) is pivotably mounted to the support (20) above the pivotal mounting axis (A1) of the support (20) and that the lower link (32) is pivotably mounted below the axis (A1).

6. An arrangement according to claim 5 characterised in that a first transmission member (52) is connected to the lower link (32).

7. An arrangement according to claim 6 characterised in that the lower link (32) comprises a forwardly extending longitudinal prolongation portion (57), to the free end of which the first transmission member (52) is connected.

8. An arrangement according to any one of claims 2 to 7 characterised in that the pivotal mounting axis (A1) of the support (20) is substantially contained in the vertical and longitudinal plane of the two links (30, 32) so as to render negligible the influence of the pivotal movement of the support (20) about the axis (A1) on the displacement of the first transmission member (52) which is connected to the link (32).

9. An arrangement according to any one of claims 2 to 8 characterised in that it is of the type in which the frame structure (12) comprises a base (14) formed by a substantially horizontal plate for fixing to the body of the vehicle and comprises two parallel uprights (16) which are arranged perpendicularly from the base (14), between the free ends of which the support (20) is mounted pivotably, of the type in which the support (20) comprises a transverse arm (58), to the free end of which the second transmission member (54) is connected.

10. An arrangement according to claim 9 characterised in that the members (52, 54) for transmission of the movements of the lever (46) are sheathed cables and that the cable sheaths (60, 61) bear against a lower face (62) of the base (14) of the frame structure (12) of the arrangement.

11. An arrangement according to any one of claims 2 to 10 characterised in that it is in the form of a mechano-welded structure.

12. An arrangement according to any one of claims 2 to 11 characterised in that the transverse movements of the lever (46) correspond to the selection of a line of gear ratios and that the longitudinal movements of the lever (46) correspond to an engagement of a gear ratio.
